# EUROPEAN PATENT SPECIFICATION

(11) **EP 4 471 941 B1**
(45) Date of publication and mention of the grant of the patent: **11.03.2026**
(21) Application number: 23907539.3
(22) Date of filing: 11.12.2023
(51) Int. Cl.: H01M 10/6556, H01M 10/613, H01M 10/6551, H01M 10/6554, H01M 10/625, H01M 50/213, H01M 50/289, F28D 1/03, F28F 3/12, F28F 3/02, F28F 9/02

(54) **DOUBLE-SIDED COOLING-TYPE BATTERY MODULE AND HEAT SINK INCLUDED THEREIN**
DOPPELSEITIG GEKÜHLTES BATTERIEMODUL UND DARIN ENTHALTENER KÜHLKÖRPER
MODULE DE BATTERIE À REFROIDISSEMENT DOUBLE FACE ET DISSIPATEUR THERMIQUE INCLUS DANS CELUI-CI

(30) Priority: 19.12.2022 KR 20220178569; 25.08.2023 KR 20230112325
(43) Date of publication of application: 04.12.2024
(73) Proprietor: LG Energy Solution, Ltd., Seoul 07335 (KR)
(72) Inventor: PARK, Sung-Kyu, Daejeon 34122 (KR)
(74) Representative: Plasseraud IP
(86) International application number: PCT/KR2023/020304
(87) International publication number: WO 2024/136253

(56) References cited:
- JP-A- 2014 216 298
- JP-A- 2014 216 298
- JP-A- 2017 027 962
- JP-A- 2019 046 578
- JP-A- 2021 513 192
- KR-A- 20150 100 365
- US-A1- 2016 164 148
- US-A1- 2021 296 715
- US-A1- 2022 131 212

## Description

### TECHNICAL FIELD

The present disclosure relates to a double-sided cooling-type battery module and a heat sink included therein, and more specifically, it relates to a double-sided cooling-type battery module capable of double-sided cooling to minimize temperature differences and thermal-resistance differences between cells and facilitate effective cooling control, thereby securing efficient cooling performance, and a heat sink included therein.

The present application claims priority to Korean Patent Application No. 10-2022-0178569 filed on December 19, 2022 in the Republic of Korea.

The present application claims priority to Korean Patent Application No. 10-2023-0112325 filed on August 25, 2023 in the Republic of Korea.

### BACKGROUND ART

Semi-permanent batteries that convert electrical energy into chemical energy and can be repeatedly charged and discharged are called secondary batteries distinguished from primary batteries that cannot be reused after use.

In particular, lithium-ion secondary batteries have advantages such as high energy storage density, lightweight and miniaturized structures, excellent safety, a low discharge rate, and a long lifespan, so they are widely used as electric vehicle batteries nowadays. For reference, lithium-ion secondary batteries are generally classified into cylindrical, prismatic, and pouch types depending on their manufacturing types, and their uses range from electric vehicle batteries to ESS (Energy Storage System) batteries and other electrical devices.

Currently, the operating voltage of one lithium-ion secondary battery cell is approximately 2.5V to 4.5V. Therefore, in order to apply secondary batteries to an energy source for electric vehicles, a plurality of lithium-ion secondary battery cells may be connected in series and/or parallel to produce a battery module. Then, a single battery module may be used, or two or more battery modules may be electrically connected in series and/or parallel to produce a battery pack or the like, which is a higher level device. Here, the battery module and the battery pack may be used interchangeably.

Meanwhile, since secondary batteries involve chemical reactions during charging and discharging, their performance may deteriorate when used at a temperature higher than an appropriate temperature, and failure of heat control to an appropriate temperature is likely to lead to unexpected ignition or explosion. Furthermore, since the battery pack, which is a collection of secondary batteries, has a structure in which the secondary batteries are intensively stored inside a pack case, it may be vulnerable to thermal events.

Accordingly, cooling performance is most important for battery modules. In particular, cooling performance is very important in securing safety while stably performing overall functions of the battery module such as charging/discharging, regenerative braking, and the like.

Typical methods for cooling lithium-ion secondary battery cells in a battery module may include air cooling through cooling plates or water cooling through a heat sink. Here, a water cooling structure may be designed to configure a closed coolant path for the coolant flow. In addition, most of the paths require physical spaces to form the coolant flow, so one side of the cooling structure is often designed and manufactured in a non-planar structure having protruding portions or an uneven shape on the plate surface. Accordingly, only one side of the cooling structure may be planar, and the other side may have a non-planar shape.

However, in such a cooling structure where only one side has a planar shape, if the non-planar side is used as a cooling surface, temperature differences may occur due to noncontact portions. In particular, in the case of battery modules configured as cylindrical cells, which are widely used nowadays, the bottom of each cell may be cooled. At this time, since the area of the bottom of each cell is not large, there may be a portion that does not come into contact with the cell if cooling is performed on the non-planar side. In addition, this may cause thermal-resistance differences, thereby increasing the temperature differences between cells. In this way, if cooling performance deteriorates, it is difficult to control the cooling system and is disadvantageous for energy efficiency. In addition, since the conventional cooling structure uses only one side as a cooling surface, it is disadvantageous for integration and energy density, and the manufacturing costs of the module also increases.

Document US 2022/131212A1 discloses a battery module according to the preamble of claim 1.

An example of a battery module having a full-liquid type cooling plate is described, for example, in JP 2014-216298 A.

### DISCLOSURE

### Technical Problem

The present disclosure has been designed to solve the problems of the related art, and therefore the present disclosure is directed to providing a double-sided cooling-type battery module capable of double-sided cooling to minimize temperature differences and thermal-resistance differences between cells and facilitate effective cooling control, thereby securing efficient cooling performance.

In addition, the present disclosure is also to provide a double-sided cooling-type battery module capable of significantly reducing the number of heat sinks required for the battery module through double-sided cooling, which is advantageous for energy density and is able to reduce the manufacturing costs of the module.

In addition, the present disclosure is also to provide a heat sink capable of enhancing cooling performance through a plurality of cooling-medium channels and capable of improving the cooling-medium distribution ratio and heat transfer efficiency, in particular, by adjusting the specifications and shape of a main channel.

The technical problems that the present disclosure seeks to solve are not limited to the above-mentioned problems, and other problems not mentioned above will be clearly understood by those skilled in the art from the description of the invention described below.

### Technical Solution

According to the claimed invention, there is provided a battery module according to claim 1.

The battery module may further include a plurality of frame portions accommodating the respective cell assemblies, and with respect to the heat sink disposed in the horizontal direction, one frame portion may be disposed on the upper surface of the heat sink to come into surface-contact therewith, and another frame portion may be disposed upside down on the lower surface of the heat sink to come into surface-contact therewith.

The plurality of cooling-medium channels may be disposed in the circulation space to form a circulation path of the cooling medium.

The uppermost surface and lowermost surface of the pair of cooling plates may be configured to be flat.

Through the port portion, the cooling medium may flow in through one of the pair of cooling plates and flow out through the other cooling plate.

The circulation space may include: a first circulation space in which the cooling medium introduced through the inlet port flows in a first direction, which is the longitudinal direction of the cooling plate; a second circulation space in which the cooling medium flows in a second direction opposite the first direction and exits through the outlet port; and a transition space formed on the opposite side of the port portion and connecting the first circulation space and the second circulation space to each other.

The cooling-medium channel may include: a pass channel disposed at the center of the circulation space in the longitudinal direction of the cooling plate; and a main channel disposed in the first circulation space and the second circulation space.

The pass channel may separate the first circulation space and the second circulation space from each other.

The pass channel may include one end disposed adjacent to the port portion and the other end extending to the transition space, and may transfer a portion of the cooling medium introduced through the inlet port to the transition space.

The pass channel and main channel may be configured in an uneven shape in the longitudinal cross-section to have a convex section and a concave section such that the convex section is in surface-contact with the inner wall of the second plate and such that the concave section is in surface-contact with the inner wall of the first plate.

A cutout portion may be formed on the convex section of the pass channel to allow the cooling medium to flow into the concave section.

The uneven shape may be formed sequentially and repeatedly in the main channel.

The cooling-medium channel may further include a sub-channel provided in the first circulation space, the second circulation space, or the transition space and disposed at the position where the pass channel and the main channel are not disposed.

The sub-channel may include: a recessed plate disposed in surface-contact with the first plate; a protruding plate protruding from the recessed plate in the thickness direction of the cooling plate and disposed in surface-contact with the second plate; and a bent surface connecting the recessed plate and the protruding plate to each other, and a through-hole may be formed on the bent surface.

In another embodiment, the main channel may include: a base plate in surface-contact with the first plate; a protruding portion protruding from the base plate and having a circular transverse cross-section; and a connecting surface portion configured to connect the base plate and the protruding portion to each other, and a pair of through-holes may be formed in an arc shape on the connecting surface portion.

In another embodiment, the cooling-medium channel may include: a pass channel disposed at the center of the circulation space in the longitudinal direction of the cooling plate; and a main channel disposed in the first circulation space, the second circulation space, and the transition space, and the main channel may include: a base plate in surface-contact with the first plate; and a plurality of protruding members provided on the base plate and having a longitudinal cross-section of an "n" shape.

In addition, according to the present disclosure, there may be provided a battery pack including one or more battery modules described above.

In addition, according to the present disclosure, there may be provided a vehicle including one or more battery packs described above.

### Advantageous Effects

According to one aspect of the present disclosure, since the both surfaces of the heat sink are configured in a planar shape to enable double-sided cooling, temperature differences and thermal-resistance differences between cells may be minimized, and cooling control may be effectively performed, thereby securing efficient cooling performance.

In addition, since the number of heat sinks required for the battery module may be significantly reduced through double-sided cooling, it is advantageous for energy density, and manufacturing costs of the module may be reduced.

According to another aspect of the present disclosure, cooling performance may be improved through a plurality of cooling-medium channels, and in particular, heat transfer efficiency may be improved by adjusting the arrangement of the pass channel and the specifications and shape of the main channel.

The effects of the present disclosure are not limited to the effects described above, and effects not mentioned may be clearly understood by those skilled in the art to which the present disclosure pertains from this specification and the accompanying drawings.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a combined perspective view of a battery module according to an embodiment of the present disclosure.
FIG. 2 is an exploded perspective view of a battery module according to an embodiment of the present disclosure.
FIG. 3 is a perspective view of a heat sink of a battery module according to an embodiment of the present disclosure.
FIG. 4 is an exploded perspective view of a heat sink of a battery module according to an embodiment of the present disclosure.
FIG. 5 is a cross-sectional view taken along line A-A' in FIG. 3.
FIG. 6 is a cross-sectional view taken along line B-B' in FIG. 3.
FIG. 7 is a side view of a battery module according to an embodiment of the present disclosure.
FIG. 8 is a partially enlarged view of FIG. 7.
FIG. 9 is a diagram illustrating a battery module according to an embodiment of the present disclosure.
FIG. 10 is a partially cross-sectional view of a battery module according to an embodiment of the present disclosure.
FIG. 11 is a plan view in which a top plate was removed from a heat sink of a battery module according to an embodiment of the present disclosure.
FIG. 12 is a partially perspective view illustrating a portion adjacent to a port in a heat sink of a battery module according to an embodiment of the present disclosure.
FIG. 13 is a partially perspective view illustrating a portion adjacent to a transition space in a heat sink of a battery module according to an embodiment of the present disclosure.
FIGS. 14 and 15 are partially enlarged views of FIG. 5.
FIG. 16 is a plan view and a cross-sectional view of a sub-channel in a heat sink of a battery module according to an embodiment of the present disclosure.
FIGS. 17 and 18 are diagrams schematically illustrating the flow of cooling medium introduced through an inlet port of a heat sink of a battery module according to an embodiment of the present disclosure.
FIGS. 19 and 20 are diagrams illustrating a main channel of a battery module according to another embodiment of the present disclosure.
FIGS. 21 and 22 are diagrams illustrating a main channel of a battery module according to another embodiment of the present disclosure.
FIG. 23 is a diagram of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

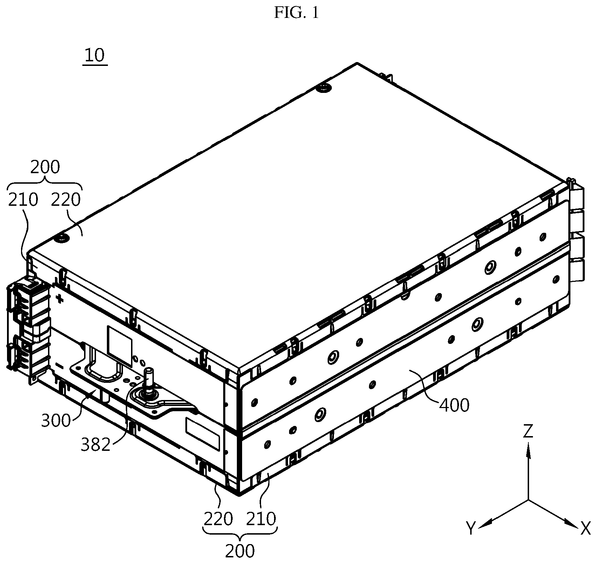

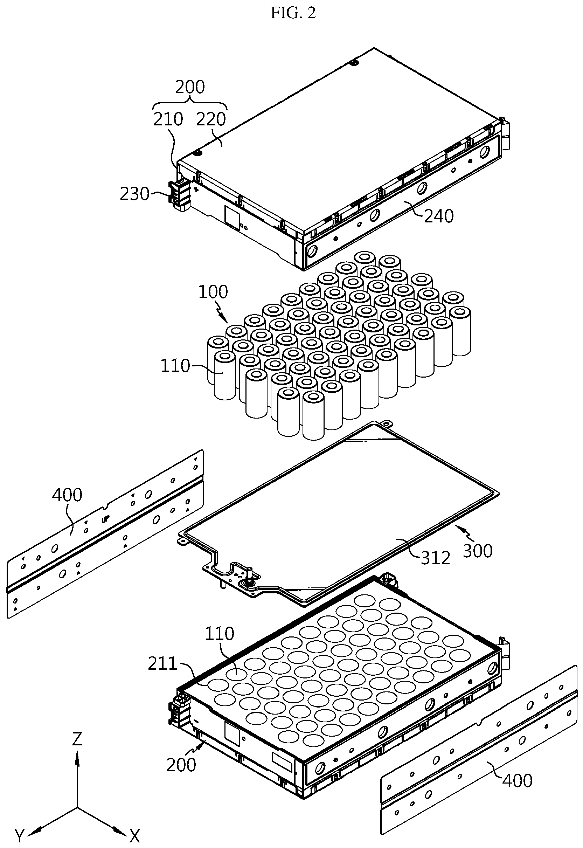

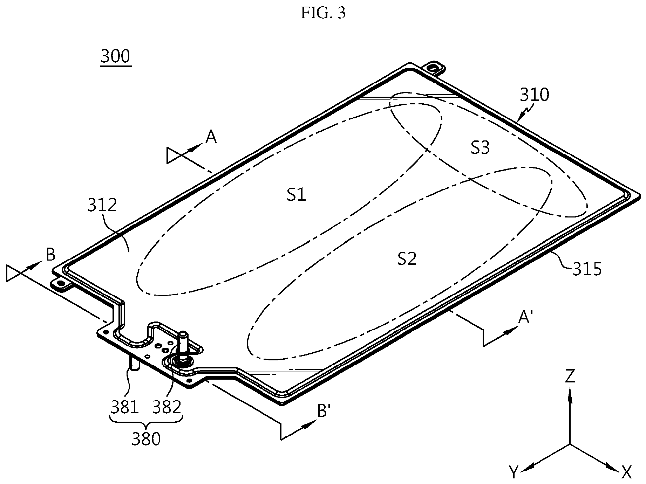

FIG. 1 is a combined perspective view of a battery module according to an embodiment of the present disclosure, FIG. 2 is an exploded perspective view of a battery module according to an embodiment of the present disclosure, and FIG. 3 is a perspective view of a heat sink of a battery module according to an embodiment of the present disclosure.

Referring to FIGS. 1 and 2, a battery module 10 according to the present disclosure may include a plurality of cell assemblies 100, frame portions 200 that accommodate the cell assemblies 100, a heat sink 300 interposed between a pair of frame portions 200, and fixing plates 400.

The cell assembly 100 may have one or more battery cells 110.

The battery cell 110 may indicate a secondary battery that includes an electrode assembly, an electrolyte, and a battery case accommodating the electrolyte and the electrode assembly, and may be configured as a cylindrical secondary battery, a pouch-type secondary battery, or a prismatic secondary battery. Hereinafter, in the present embodiment, a description will be made based on the case where the battery cells 110 are cylindrical secondary batteries. These battery cells 110 may be a plurality of cylindrical secondary batteries arranged in the horizontal direction in a vertically upright state.

The plurality of battery cells 110 may be stacked on each other to configure the cell assembly 100. For example, the plurality of battery cells 110 may be stacked to be arranged in the horizontal direction (the Y-axis direction in the drawing) while standing in the vertical direction (the Z-axis direction in the drawing).

The plurality of cell assemblies 100 may be accommodated in a plurality of frame portions 200, respectively. That is, one frame portion 200 may accommodate one cell assembly 100. The frame portion 200 may include a cell frame 210 that accommodates the cell assembly 100 and a cover member 220 that covers the cell frame 210.

The cell frame 210 may hold and fix the cell assembly 100. The cell frame 210 may have an integrated body having an enough height to completely accommodate the battery cell 110. An accommodation hole 211 may be formed in the cell frame 210 to completely accommodate the battery cell 110. Although not shown in the drawing, a holder may be further provided in the accommodation hole 211 to completely fix the battery cell 110. Through this, the cell assembly 100 may be completely fixed to the cell frame 210. Meanwhile, the cell frame 210 may be configured by assembling two structures. In this case, the cell frame 210 may be configured as a lower cell frame and an upper cell frame that is assembled with the lower cell frame, which may improve the convenience of assembly, compared to the frame portion 200 configured as the integrated body. Meanwhile, the cover member 220 may be provided to cover one surface of the cell frame 210.

The opposite surface of the cover member 220 in the frame portion 200 may be configured to be open through the accommodation hole 211, so that the lower ends of the battery cells 110 accommodated in the accommodation holes 211 may be exposed.

Meanwhile, the frame portion 200 may have a PCB board or a terminal 230 provided therein, and reinforcement plates 240 may be provided on the side surface thereof.

Hereinafter, a description will be made by way of with reference to the case where a pair of cell assemblies 100 and a pair of frame portions 200 corresponding thereto, instead of the plurality of cell assemblies 100 and the plurality of frame portions 200, are provided.

Referring to FIG. 2, with respect to the heat sink 300 arranged in the horizontal direction, one frame portion 200 may be disposed on the upper surface of the heat sink 300 to come into surface-contact therewith, and another frame portion 200 may be disposed upside down on the lower surface of the heat sink 300 to come into surface-contact therewith. In the drawing, the frame portion 200 provided on the upper surface of the heat sink 300 may have the lower surface that is open through the accommodation holes 211, so that the lower ends of the battery cells 110 of one cell assembly 100, among the pair of cell assemblies 100 accommodated in the accommodation hole 211, may be exposed on the lower surface of the frame portion 200. In addition, the frame portion 200 provided on the lower surface of the heat sink 300 may have the upper surface that is open through the accommodation holes 211, so that the upper ends of the battery cells 110 of the other cell assembly 100, among the pair of cell assemblies 100 accommodated in the accommodation hole 211, may be exposed on the upper surface of the frame portion 200.

Accordingly, the cell assembly 100 stored therein, that is, the battery cells 110, may be provided to directly come into surface-contact with the heat sink 300, which will be described later.

The heat sink 300 may be a part that cools the battery module 10. Referring to FIGS. 1 and 2, the heat sink 300 may be interposed between the pair of cell assemblies 100. The heat sink 300 may be configured such that both surfaces thereof facing the cell assembly 100 have a planar shape. As will be described in detail later, the heat sink 300 may include a pair of cooling plates 310, and the uppermost surface and the lowermost surface of the pair of cooling plates 310 may be configured to be flat. FIG. 3 shows the uppermost surface of the pair of cooling plates 310.

As described above, since the both surfaces of the cooling plates 310 are configured in the planar shape, the pair of cell assemblies 100 in surface-contact with the pair of cooling plates 310 may be cooled. That is, one cell assembly 100 disposed on the upper surface of the heat sink 300 and the lower ends of a plurality of battery cells 110 accommodated in the cell assembly 100 may be disposed to come into direct contact with the uppermost surface of the pair of cooling plates 310, and the other cell assembly 100 disposed on the lower surface of the heat sink 300 may be disposed to come into direct contact with the lowermost surface of the pair of cooling plates 310.

Accordingly, the temperature differences and the thermal-resistance differences between the battery cells 110 may be minimized, thereby enabling effective cooling control and securing efficient cooling performance. In addition, the number of heat sinks 300 required for the pair of cell assemblies 100 may be reduced from the conventional two or more to one, which is advantageous for energy density and may reduce the manufacturing costs of the module.

Referring to FIG. 2, the battery module 10 according to the present embodiment may include a fixing plate 400. The fixing plate 400 may fix the pair of frame portions 200 and the heat sink 300 interposed between the pair of frame portions 200. The reinforcement plate 240 may be provided corresponding to the fixing plate 400 on the outer surface of the frame portion 200 where the fixing plate 400 is mounted.

Hereinafter, the double-sided cooling configuration of the heat sink 300 will be described in detail.

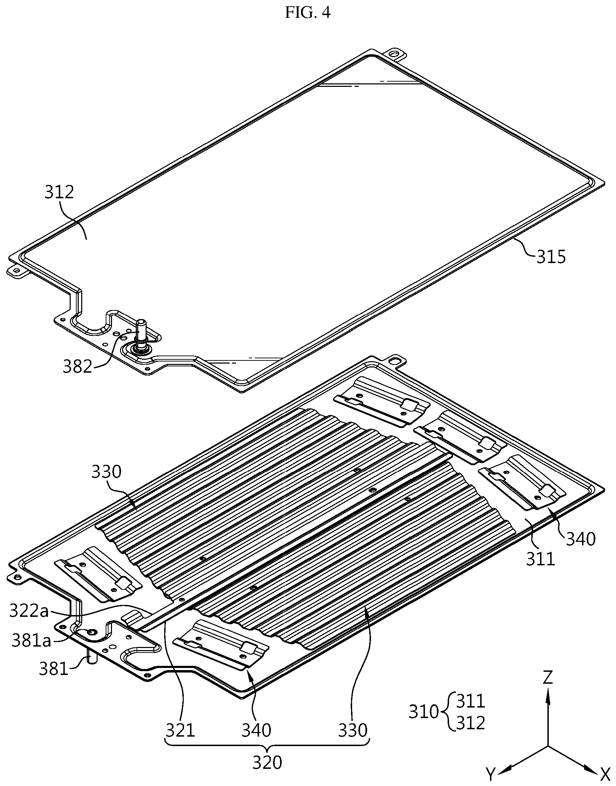

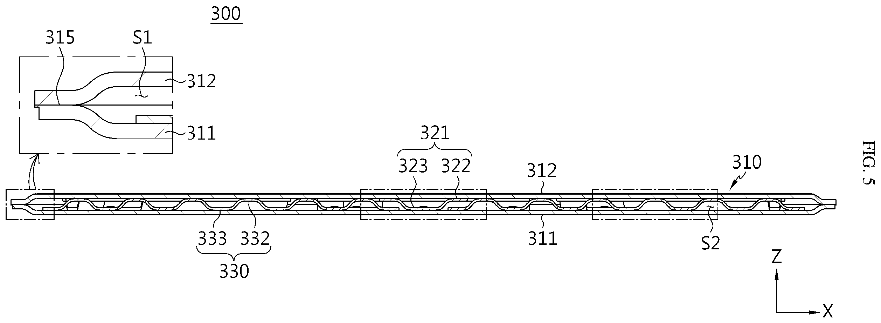

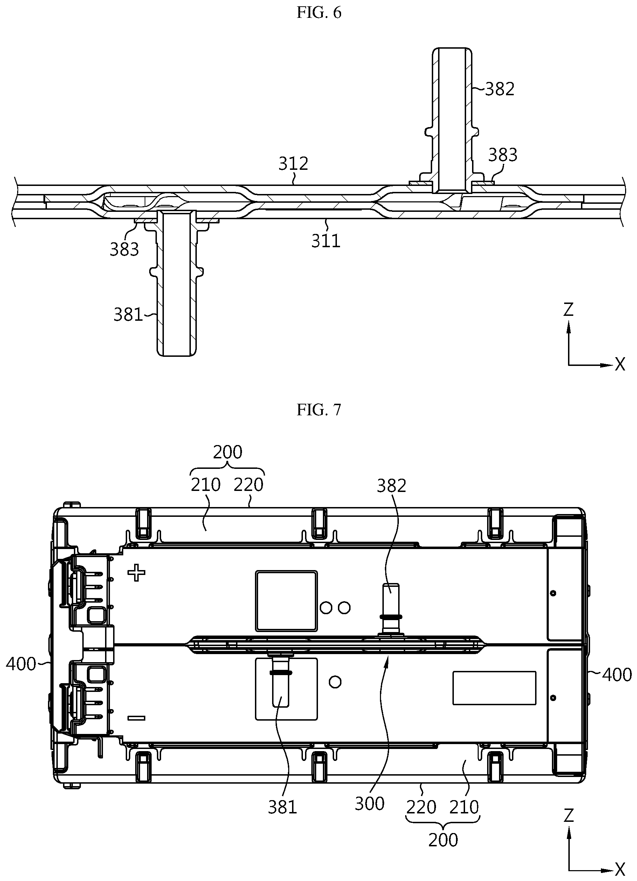

FIG. 4 is an exploded perspective view of a heat sink of a battery module according to an embodiment of the present disclosure, FIG. 5 is a cross-sectional view taken along line A-A' in FIG. 3, and FIG. 6 is a cross-sectional view taken along line B-B' in FIG. 3.

Referring to FIGS. 4 to 6 along with FIGS. 2 and 3, the heat sink 300 includes a pair of cooling plates 310 spaced a predetermined distance apart from each other and having a circulation space formed therein to allow a cooling medium to flow therein, a plurality of cooling medium channels 320 through which the cooling medium flows, and a port portion 380 provided on one side of the cooling plate 310 to allow the cooling medium to flow in and out therethrough. In the implemented configuration of the present disclosure, the cooling medium may be water, but may include one or more cooling fluids capable of exchanging heat with the surrounding environment in addition to water.

Referring to FIGS. 4 and 5 along with FIG. 3, the pair of cooling plates 310 may indicate outer members disposed on the upper and lower surfaces of the heat sink 300. The pair of cooling plates 310 may include a first plate 311, and a second plate 312 disposed above the first plate 311 to be spaced apart therefrom by the thickness of the circulation space.

The first plate 311 and the second plate 312 may have one surface configured in a planar shape. That is, the upper surface of the first plate 311 and the upper surface of the second plate 312 shown in FIG. 5 may be configured to be flat. Accordingly, it is modified from the conventional non-planar structure into the planar shape, thereby minimizing temperature differences and thermal-resistance differences between the battery cells 110 when it comes into surface-contact with the lower ends of the battery cells 110. The edges of the first plate 311 and the second plate 312 may be bonded to form a bonded portion 315. This bonded portion 315 may be produced by brazing.

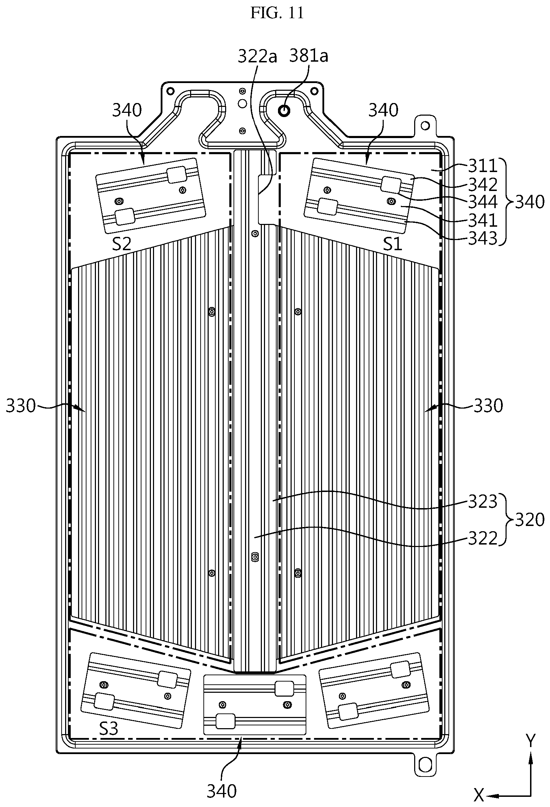

The first plate 311 and the second plate 312 may be disposed to be spaced a predetermined distance apart from each other to have a circulation space, in which the cooling medium flows, formed therein. The circulation space, which will be described in detail later, may be divided into a first circulation space S1 in which the cooling medium introduced through an inlet port 381 flows primarily, a second circulation space S2 in which the cooling medium flows secondarily to an outlet port 382, and a transition space S3 (see FIG. 11).

Referring to FIGS. 4 and 5, the plurality of cooling medium channels 320 may be disposed in the circulation space. The plurality of cooling medium channels 320 may be disposed in the circulation space to form a circulation path of the cooling medium. The plurality of cooling medium channels 320 may include a pass channel 321, a main channel 330 disposed in the first circulation space S1 and the second circulation space S2, and a sub-channel 340.

The pass channel 321 may be disposed at the center of the cooling plate 310 in the longitudinal direction and may configure the primary direction of the circulation path of the cooling medium. The main channels 330 may be disposed to be substantially uniform over the entire region of the planar surface of the heat sink 300 and may determine a distribution ratio of the cooling medium flow, which may be related to the heat transfer efficiency. The heat transfer efficiency may vary depending on the shape and specifications of the main channel 330.

In addition, the sub-channel 340 may be disposed in the circulation space where the pass channel 321 and the main channel 330 are not disposed, thereby securing internal pressure rigidity. That is, the sub-channel may firmly hold the first plate 311 and the second plate 312 when the cooling medium flows through the heat sink 300 to change internal pressure thereof, thereby minimizing a change in the gap between the first plate 311 and the second plate 312 depending on a change in the internal pressure. The plurality of cooling medium channels 320 with such configuration may improve the cooling performance of the heat sink 300 itself, which will be described in detail later in the structure of the heat sink 300.

Referring to FIG. 6, the port portion 380 is a portion through which the cooling medium to flow in and flow out of the circulation space of the cooling plate 310. Through the port portion 380, the cooling medium may flow in through one of the pair of cooling plates 310 and flow out through the other cooling plate 310. Specifically, the port portion 380 may include an inlet port 381 that is connected to the first plate 311 and communicates with the circulation space, and an outlet port 382 that is connected to the second plate 312 and communicates with the circulation space.

The port portion 380 may be configured in both directions. As shown in FIGS. 4 and 6, the inlet port 381 is be formed on the first plate 311, and the outlet port 382 is be provided on the second plate 312 such that the inlet port 381 and the outlet port 382 are provided on the opposite sides in the opposite directions. Accordingly, the cooling medium filling performance may be improved inside the heat sink 300. In particular, according to the implemented configuration, the cooling medium flow may be optimized to easily induce full filling thereof. In addition, since the port portion 380 is provided in both directions, it may be easy to drain the cooling medium when repairing the heat sink 300 or the like.

As shown in FIG. 6, a brazing washer 383 may be interposed between the inlet port 381 and the cooling plate 310 and between the outlet port 382 and the cooling plate 310. The port portion 380 may be fixed to the first plate 311 and the second plate 312 in the heat sink 300 by brazing bonding using the brazing washer 383. For example, as shown in FIG. 6, the brazing washer 383 may be interposed between the inlet port 381 and the first plate 311 and between the outlet port 382 and the second plate 312. According to this implemented configuration, the brazing bonding between the port 380 and the cooling plate 310 may be improved.

According to the above implemented configuration, since the both surfaces of the heat sink 300 are configured in a planar shape to enable double-sided cooling, temperature differences and thermal-resistance differences between the cells may be minimized, and cooling control may be effectively performed, thereby securing efficient cooling performance. In addition, since the number of heat sinks 300 required for the battery module 10 may be significantly reduced through double-sided cooling, it is advantageous for energy density, and manufacturing costs of the module may be reduced.

In addition, cooling performance may be improved through a plurality of cooling-medium channels 320, and in particular, heat transfer efficiency may be improved by adjusting the specifications and shape of the main channel 330.

Hereinafter, the fixing structure of the frame portions 200 of the battery module 10 and the heat sink 300 interposed between the pair of frame portions 200 will be described in more detail.

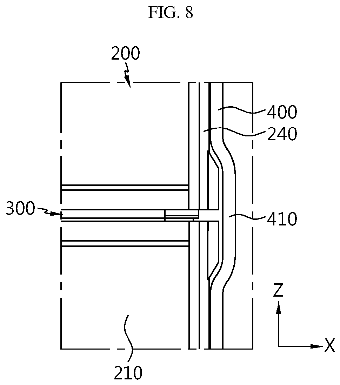

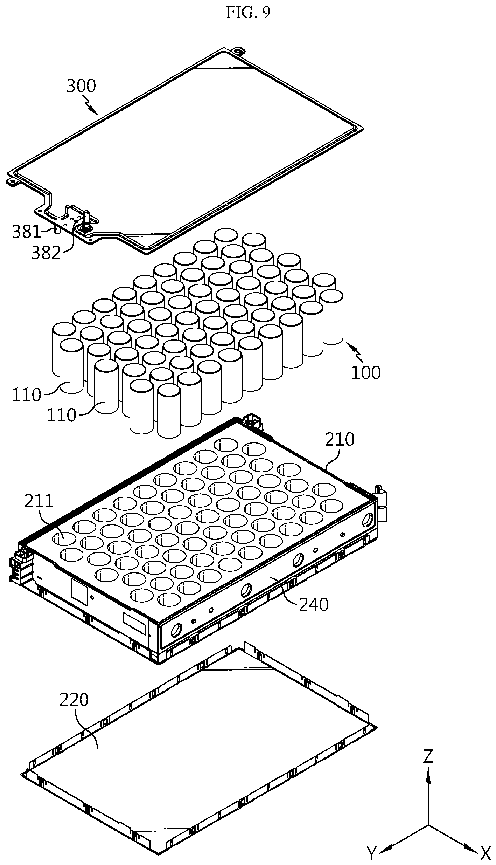

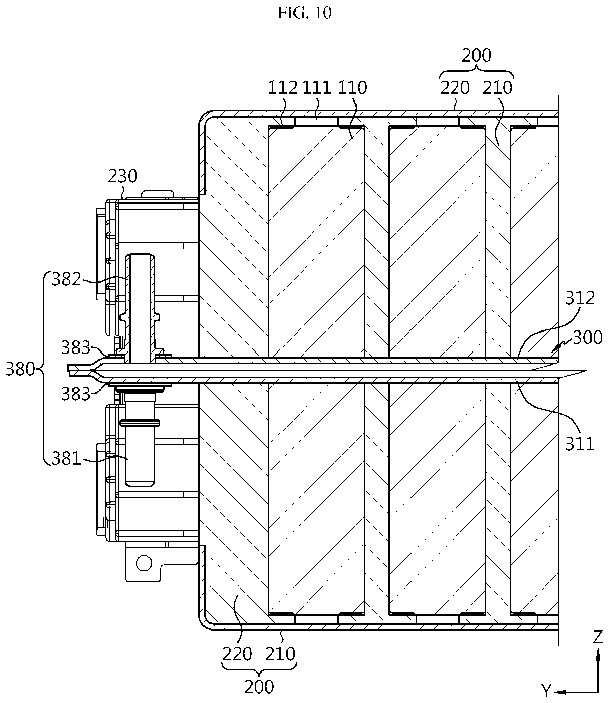

FIG. 7 is a side view of a battery module according to an embodiment of the present disclosure, FIG. 8 is a partially enlarged view of FIG. 7, FIG. 9 is a diagram illustrating a battery module according to an embodiment of the present disclosure, and FIG. 10 is a partially cross-sectional view of a battery module according to an embodiment of the present disclosure.

Referring to FIGS. 7 and 8 along with FIG. 2, the battery module 10 according to the present embodiment may include a fixing plate 400, and the fixing plate 400 may fix a pair of frame portions 200 and the heat sink 300 interposed between the pair of frame portions 200.

The fixing plate 400 may have a convex protruding portion 410 provided at the center thereof in the longitudinal direction. The convex protruding portion 410 may provide the structural rigidity to the fixing plate 400 and may firmly fix the pair of the frame portions 200, thereby improving the structural rigidity of the battery module 10. In addition, the convex protruding portion 410 may be configured to widen the gap around the frame portion 200 in which the heat sink 300 is positioned, thereby preventing the contact between the bonded portion 315 of the cooling plate 310 and the fixing plate 400. Accordingly, direct contact with the heat sink 300 interposed between the pair of frame portions 200 may be prevented and the ventilation of external air is facilitated. The convex protruding portion 410 may be advantageous for the structural rigidity and cooling.

Referring to FIG. 9, illustrated is the battery module 10 in FIG. 7 in which only the elements on the pair of cell assemblies 100 are shown in the exploded state. As shown in the drawing, the frame portion 200 and the cell assembly 100 are disposed upside down, so the battery cells 110 may be provided to be exposed on the lower surface (the upper surface in the drawing) of the cell frame 210 such that the battery cells 110 come into direct contact with the lower surface of the heat sink 300.

Here, referring to FIG. 10, the battery cell 110 may have a tab 111 and a one-end surface 112 at one end thereof. The tab 111 may have a first polarity, and the one-end surface 112 may have a second polarity, and the tab 111 and the one-end surface 112 may be electrically insulated from each other. The first polarity may correspond to the positive electrode of the battery cell 110, and the second polarity may correspond to the negative electrode of the battery cell 110. That is, the tab 111 may be the positive electrode member of the battery cell 110, and the one-end surface 112 may be the negative electrode member of the battery cell 110. The tab 111 may be provided to protrude from the one-end surface 112. Alternatively, the tab 111 may be configured not to protrude from the one-end surface 112. For example, it may be the so-called tab-less structure in which the tab 111 is disposed on the same plane as the one-end surface 112. In the implemented configuration of the present disclosure, the battery cell 110 may have both the positive electrode and the negative electrode at one end, making electrical connection in one direction.

Meanwhile, as shown in FIG. 10, since the pair of cell assemblies 100 is disposed upside down to each other with respect to the heat sink 300, the battery cells 110 disposed on the upper surface of the heat sink 300 may have the tab 111 and the one-end surface 112 for electrical connections may be disposed at the top of the battery cells 110, and the battery cells 110 disposed on the lower surface of the heat sink 300 may have the tab 111 and the one-end surface 112 for electrical connections may be disposed at the bottom of the battery cells 110.

Accordingly, the opposite surfaces of the battery cells 110, where the tab 111 and the one-end surface 112 for electrical connections are not provided, may be in direct surface-contact with the heat sink 300. As described above, since the both surfaces of the heat sink 300 are configured in a planar shape to enable double-sided cooling while obtaining more contact area with the battery cells 110, temperature differences and thermal-resistance differences between the cells may be minimized. Therefore, according to this implemented configuration of the present disclosure, cooling control may be effectively performed to secure efficient cooling performance, and the number of heat sinks 300 required for the battery module 10 may be significantly reduced through double-sided cooling, which is advantageous for energy density and may reduce manufacturing costs of the module. Meanwhile, instead of the configuration in which the battery cell 110 and the heat sink 300 directly come into surface-contact with each other, the battery cell may come into indirect contact with the heat sink 300 with a thermally conductive material (TIM), such as a thermally conductive adhesive, interposed therebetween. Alternatively, a separate lower plate (not shown) may be provided in the frame portion 200, and the battery cell 110 and the heat sink 300 may be in indirect contact through the lower plate.

In addition, cooling performance may be improved through a plurality of cooling-medium channels 320, and in particular, heat transfer efficiency may be improved by adjusting the arrangement of the pass channel 321 and the specifications and shape of the main channel 330.

Hereinafter, the structure of the heat sink 300, in particular, the plurality of cooling medium channels 320, will be described in detail.

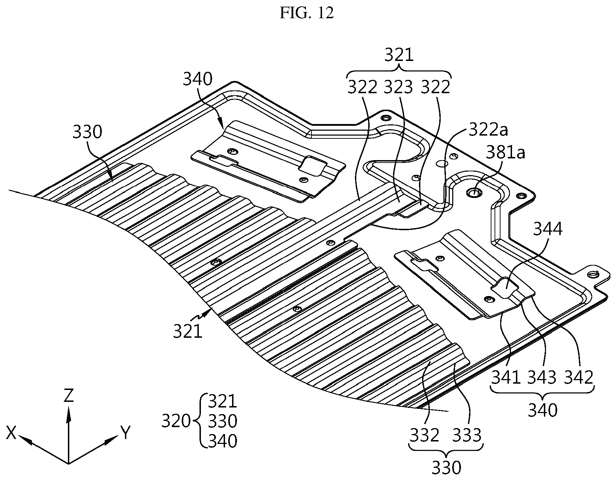

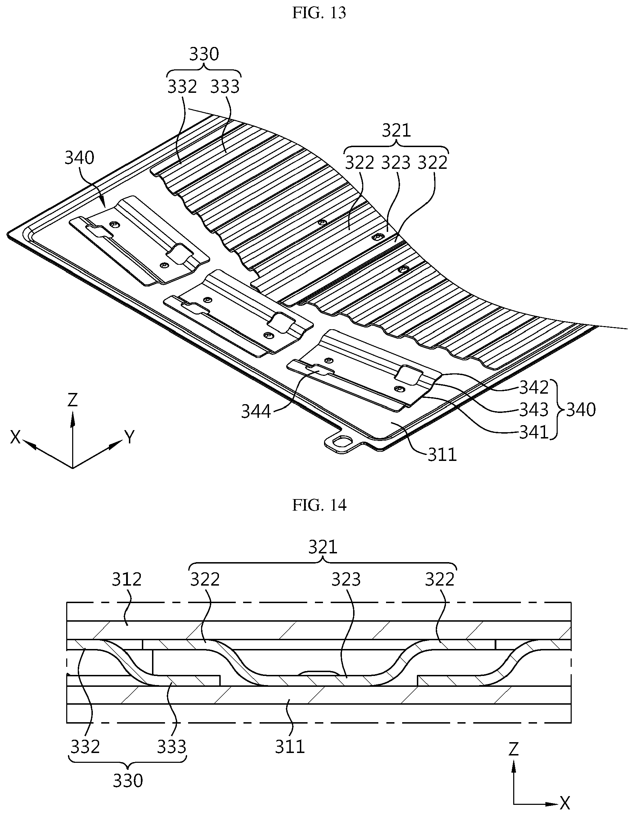

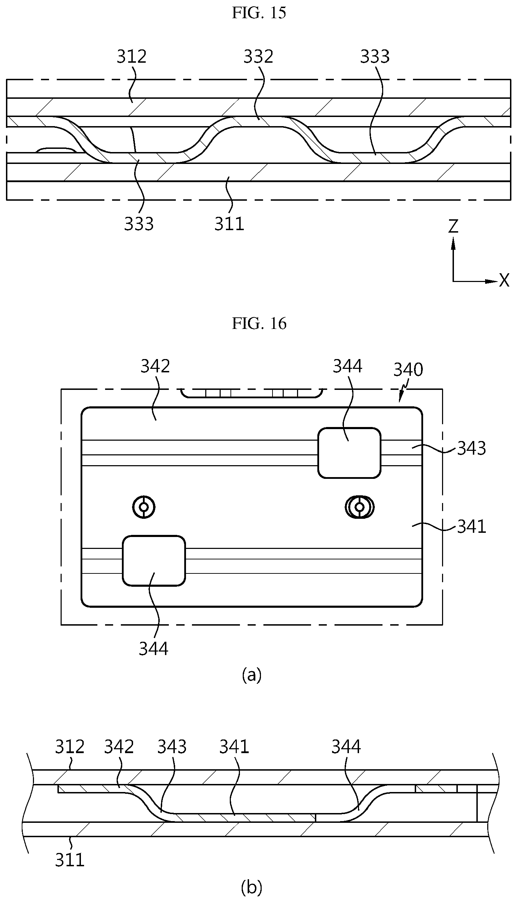

FIG. 11 is a plan view in which a top plate was removed from a heat sink of a battery module according to an embodiment of the present disclosure, FIG. 12 is a partially perspective view illustrating a portion adjacent to a port portion in a heat sink of a battery module according to an embodiment of the present disclosure, FIG. 13 is a partially perspective view illustrating a portion adjacent to a transition space in a heat sink of a battery module according to an embodiment of the present disclosure, FIGS. 14 and 15 are partially enlarged views of FIG. 5, and FIG. 16 is a plan view and a cross-sectional view of a sub-channel in a heat sink of a battery module according to an embodiment of the present disclosure.

Referring to FIG. 11, the plurality of cooling medium channels 320 may be disposed in the circulation space to form a circulation path of a cooling medium. Here, the circulation space may include a first circulation space S1, a second circulation space S2, and a transition space S3.

The first circulation space S1 may indicate the space in which the cooling medium introduced through the inlet port 381 flows in a first direction (the -Y-axis direction), which is the longitudinal direction of the cooling plate 310. Since the cooling medium flows in the first circulation space S1 immediately after flowing in through the inlet port 381, the cooling medium may have a lower temperature to produce optimal cooling performance, thereby obtaining higher cooling efficiency.

The second circulation space S2 may indicate the space in which the cooling medium flows in a second direction (the +Y-axis direction) opposite the first direction (the -Y-axis direction) and flows out through the outlet port 382. Since the cooling medium includes a cooling medium that has already completed the heat exchange process in the first circulation space S1, the cooling performance in the second circulation space S2 may be somewhat lowered, so that the cooling efficiency or heat transfer efficiency may be relatively low.

The transition space S3 may be formed on the opposite side of the second circulation space S2 and the port portion 380, and may be the space connecting the first circulation space S1 and the second circulation space S2 to each other. As shown in the drawing, the cooling medium introduced through the inlet port 381 may flow downwards through the first circulation space S1, flow to the left through the transition space S3, and then flow upwards to exit through the outlet port 382.

The cooling medium channel 320 may include a pass channel 321, a main channel 330, and a sub-channel 340 disposed at the position where the pass channel 321 and the main channel 330 are not disposed.

Referring to FIGS. 11 to 13, the pass channel 321 may be disposed at the center of the circulation space in the longitudinal direction of the cooling plate 310. The pass channel 321 may have one end disposed adjacent to the port portion 380 and the other end extending to the transition space S3. Accordingly, the pass channel 321 may separate the first circulation space S1 and the second circulation space S2 from each other to minimize the inflow of the cooling medium from the first circulation space S1 to the second circulation space S2 and reduce the re-inflow of the cooling medium from the second circulation space S2 to the first circulation space S1.

Referring to FIG. 14, the pass channel 321 may be configured in an uneven shape in the longitudinal cross-section to have a convex section 322 and a concave section 323, and the convex section 322 may be in surface-contact with the inner wall of the second plate 312, and the concave section 323 may be in surface-contact with the inner wall of the first plate 311.

A cutout portion 322a may be formed on the convex section 322 of the pass channel 321 to allow the cooling medium to flow into the concave section 323. This pass channel 321 may transfer a portion of the cooling medium introduced through the inlet port 381 to the transition space S3.

More specifically, a portion of the cooling medium may enter the concave section 323 through the cutout portion 322a formed on the convex section 322 of the pass channel 321 and flow in the first direction (the -Y-axis direction) along the longitudinal direction of the pass channel 321. The cooling medium flowing along the pass channel 321 may flow directly into the transition space S3 without passing through the first circulation space S1, so that the cooling medium with relatively excellent cooling performance may flow into the second circulation space S2.

If it were not for the pass channel 321, temperature differences, which may generally occur in the conventional heat sink, would become severe according to the flow of the cooling medium, but in the heat sink 300 according to an embodiment of the present disclosure, the cooling performance and cooling efficiency may be improved through the pass channel 321. In particular, the performance of the cooling medium (e.g., cooling medium temperature or the like) flowing in the second circulation space S2 may be configured to be substantially similar to the performance of the cooling medium in the first circulation space S1. That is, the cooling medium having the temperature the same as or slightly reduced from the temperature of the cooling medium at the inlet port 381 may flow into the second circulation space S2.

Referring to FIGS. 12, 13, and 15, the main channel 330 may be disposed in most areas of the first circulation space S1 and the second circulation space S2. The main channel 330 may be configured in an uneven shape in the longitudinal cross-section to have a convex section 332 and a concave section 333, and the uneven shape may be formed sequentially and repeatedly. In addition, the convex section 332 may be in surface-contact with the inner wall of the second plate 312, and the concave section 333 may be in surface-contact with the inner wall of the first plate 311.

That is, the main channel 330 having the uneven shape may increase the contact area with the cooling medium, thereby improving heat transfer efficiency. As described above, the shape and specifications of the main channel 330 may be factors that determine a distribution ratio of the flow of cooling medium and may be related to the heat transfer efficiency.

As shown in FIGS. 11 to 13, the sub-channel 340 may be disposed at the position where the pass channel 321 and the main channel 330 are not positioned. Referring to FIG. 16, the sub-channel 340 may be provided in the first circulation space S1, the second circulation space S2, or the transition space S3. The sub-channel 340 may include a recessed plate 341 disposed in surface-contact with the first plate 311, a protruding plate 342 protruding from the recessed plate 341 in the thickness direction of the cooling plate 310 and disposed in surface-contact with the second plate 312, and a bent surface 343 connecting the recessed plate 341 and the protruding plate 342 to each other.

The recessed plate 341 may be coupled to and supported by the first plate 311, and the protruding plate 342 may be coupled to and supported by the second plate 312. That is, it may function as a support means to maintain a predetermined gap of the circulation space between the first plate 311 and the second plate 312. Accordingly, the sub-channel 340 may be the means for securing internal pressure rigidity. That is, deformation or distortion of the cooling plate 310 may be minimized by the internal pressure applied to the circulation space.

At least one connecting hole 344 may be provided on the bent surface 343 for effective flow of the cooling medium. In the present embodiment, a total of two connecting holes 344 may be formed such that one connecting hole 344 is formed on each of both sides of the bent surface 343. Although the sub-channel 340 may act as an obstacle to the flow, the cooling medium may flow through the connecting hole 344, facilitating the flow of the cooling medium.

According to this implemented configuration, since the both surfaces of the heat sink 300 are configured in a planar shape to enable double-sided cooling, temperature differences and thermal-resistance differences between the cells may be minimized. In addition, cooling control may be effectively performed to secure efficient cooling performance, and the number of heat sinks 300 required for the battery module 10 may be significantly reduced through double-sided cooling, which is advantageous for energy density and may reduce manufacturing costs of the module.

In addition, according to this implemented configuration, cooling performance may be improved through the plurality of cooling-medium channels 320, and in particular, heat transfer efficiency may be improved by adjusting the arrangement of the pass channel 321 and the specifications and shape of the main channel 330.

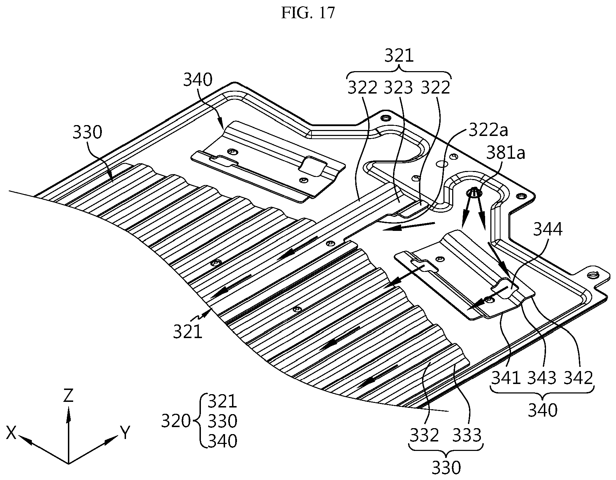

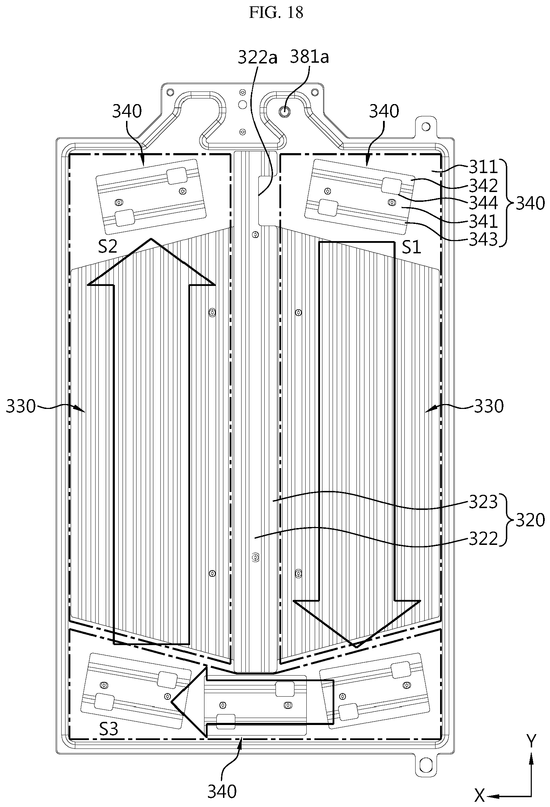

FIGS. 17 and 18 are diagrams schematically illustrating the flow of cooling medium introduced through an inlet port of a heat sink of a battery module according to an embodiment of the present disclosure.

Hereinafter, a cooling process of the heat sink 300 of the battery module 10 according to an embodiment of the present disclosure will be described in more detail with reference to FIGS. 10 to 18.

Referring to FIG. 10, the battery module 10 of the present disclosure may have the heat sink 300 interposed between one cell assembly 100 disposed on the upper surface thereof and the other cell assembly 100 disposed on the lower surface thereof.

Referring to FIGS. 17 and 18, the cooling medium may flow in through the inlet port 381 and flow into the first circulation space S1 through the inlet hole 381a (see FIG. 11).

The introduced cooling medium may proceed to the first circulation space S1, and the cooling medium may flow in the first direction (the -Y-axis direction) of the first circulation space S1. At this time, the flow of the cooling medium is not be obstructed because the cooling medium is able to flow through the connecting hole 344 of the sub-channel 340.

The cooling medium flowing through the first circulation space S1 enters the main channel 330 and flows along the main channel 330. During the flow, the convex section 332 and the concave section 333 of the main channel 330 come into contact with each other to perform heat exchange. Specifically, as shown in FIG. 15, the cooling medium may flow along the space between the convex section 332 and the concave section 333 and come into direct contact with the lower surface of the convex section 332 and the upper surface of the concave section 333 during the flow, thereby executing heat exchange. The flow of the cooling medium moving into the first circulation space S1 is directed only in the first direction. Then, the cooling medium may flow to the transition space S3. The cooling medium having passed through the main channel 330 in the first circulation space S1 has already completed heat exchange, so the cooling efficiency thereof may be relatively reduced.

Accordingly, a portion of the cooling medium may flow in through the cutout portion 322a formed on the convex section 322 of the pass channel 321 and flow in the first direction along the concave section 323 of the pass channel 321. The cooling medium flowing along the pass channel 321 may directly flow into the transition space S3 without passing through the first circulation space S1. As a result, such a cooling medium has not yet performed heat exchange, the cooling performance thereof may be better than the cooling medium passing through the main channel 330 in the first circulation space S1.

The cooling medium flowing along the pass channel 321 and the cooling medium passing through the main channel 330 meet in the transition space S3 to form a flow to the left as shown in FIG. 18.

The cooling medium flowing into the second circulation space S2 flows in the second direction (the Y-axis direction) and passes through the main channel 330. Heat exchange is performed between the cooling medium and the cooling plate 310 in the main channel 330 in the same manner as that described above, and the cooling medium finally exits to the outside through the outlet port 382. As shown in FIG. 18, the flow of cooling medium may be performed in the clockwise direction.

Meanwhile, the sub-channel 340, disposed at the position where the pass channel 321 and the main channel 330 are not disposed, may ensure internal pressure rigidity. That is, high pressure is applied to the cooling medium in order to form the flow of cooling medium, which produces high internal pressure inside the cooling plate 310. If it were not for the sub-channel 340, a predetermined gap formed by the circulation space between the first plate 311 and the second plate 312 of the cooling plate 310 would shrink (buckling phenomenon or the like) or increase, causing a risk of distortion or severe deformation. Accordingly, referring to FIG. 16, the recessed plate 341 of the sub-channel 340 may be coupled to and supported by the first plate 311, and the protruding plate 342 may be coupled to and supported by the second plate 312. Accordingly, the rigidity of the cooling plate 310 against the internal pressure may be ensured in the sub-channel 340, so that the deformation or the distortion of the cooling plate 310 may be prevented in advance.

According to an aspect of the present disclosure, since the both surfaces of the heat sink 300 are configured in a planar shape to enable double-sided cooling, temperature differences and thermal-resistance differences between the cells may be minimized. In addition, cooling control may be effectively performed to secure efficient cooling performance, and the number of heat sinks 300 required for the battery module 10 may be significantly reduced through double-sided cooling, which is advantageous for energy density and may reduce manufacturing costs of the module.

In addition, cooling performance may be improved through a plurality of cooling-medium channels 320, and in particular, heat transfer efficiency may be improved by adjusting the arrangement of the pass channel 321 and the specifications and shape of the main channel 330.

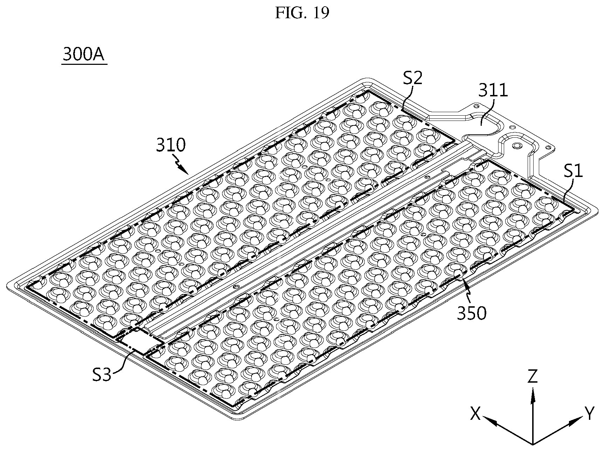

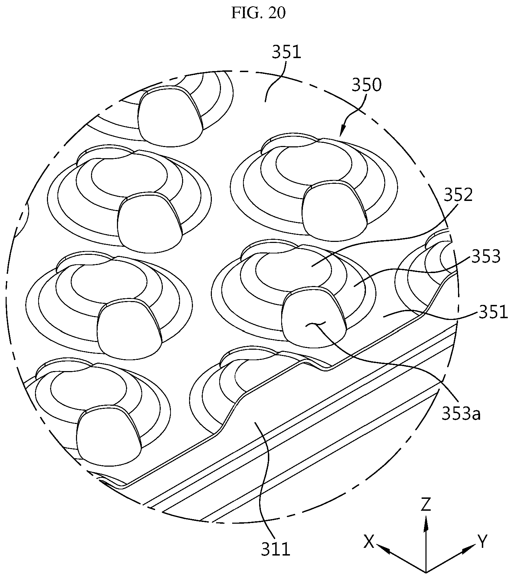

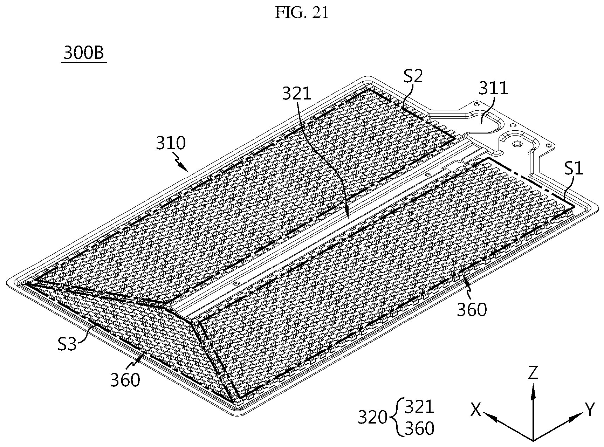

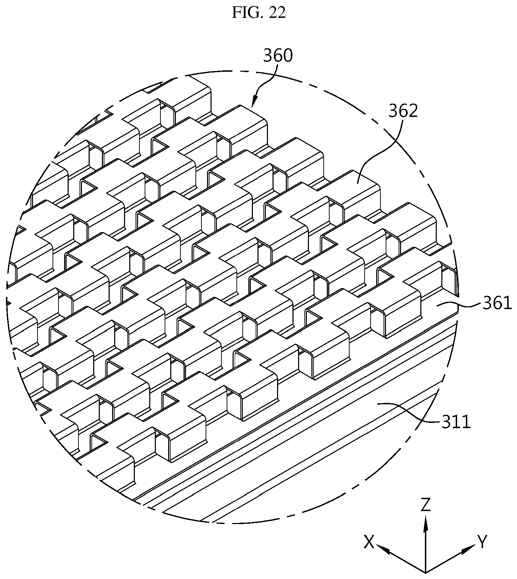

FIGS. 19 and 20 are diagrams illustrating a main channel of a battery module according to another embodiment of the present disclosure, and FIGS. 21 and 22 are diagrams illustrating a main channel of a battery module according to another embodiment of the present disclosure.

Subsequently, other embodiments of the battery module 10 in the present disclosure will be briefly described with reference to FIGS. 19 to 22.

The same reference numerals indicate the same elements in the previous drawings, so that redundant descriptions thereof will be omitted, and a description will be made based on differences from the embodiment described above.

A battery module 10 according to other embodiments of the present disclosure, compared with the embodiment described above, includes a main channel 350 having a shape and structure modified from the main channel 330 and excludes the sub-channel 340.

Referring to FIGS. 19 and 20, the main channel 350 of a heat sink 300A according to the present embodiment may include a base plate 351 in surface-contact with the first plate 311, a protruding portion 352 that protrudes from the base plate 351 and has a circular transverse cross-section, and a connecting surface portion 353 that connects the base plate 351 and the protruding portion 352 to each other.

The base plate 351 may be configured in a flat plate and disposed in surface-contact with the first plate 311.

The protruding portion 352 may be configured to protrude from the base plate 351 in the thickness direction (Z-axis direction). The protruding height of the protruding portion 352 in the thickness direction may be equal to the height of the circulation space (i.e., the gap between the first plate 311 and the second plate 312 (see FIG. 15)). Accordingly, the upper surface of the protruding portion 352 may come into surface-contact with the lower surface of the second plate 312.

The connecting surface portion 353 may connect the protruding portion 352 and the base plate 351 to each other, and the connecting surface portion 353 may be provided to be inclined in one direction. In addition, a pair of through-holes 353a may be formed in the connecting surface portion 353. Here, the through-hole 353a may be formed in an arc shape. Meanwhile, the protruding portion 352 and the connecting surface portion 353 may be formed by a press processing for the base plate 351.

The main channel 350 of the present embodiment may be disposed in most of the area inside the circulation space. That is, as shown in FIG. 19, the main channel 330 may be disposed in the first circulation space S1 and the second circulation space S2. Here, unlike the previous embodiment, the first circulation space S1 and the second circulation space S2 may indicate the spaces to the end of the first plate 311. In addition, a predetermined area from the tip of the pass channel 321 to the end of the first plate 311, where the main channel 350 is not disposed, may be the transition space S3.

In the main channel 350 according to the present embodiment, like the previous embodiment, the cooling medium introduced through the inlet port 381 may pass through the first circulation space S1, the transition space S3, and the second circulation space S2 and exit through the outlet port 382, and the heat exchange of the cooling medium may occur through the base plate 351 in contact with the first plate 311 and the protruding portion 352 in contact with the second plate 312.

A main channel 360 in a battery module 10 according to another embodiment of the present disclosure is illustrated in FIGS. 21 and 22.

Referring to FIGS. 21 and 22, the cooling medium channel 320 of a heat sink 300B according to the present embodiment may include a pass channel 321 disposed at the center of the circulation space in the longitudinal direction of the cooling plate 310, and a main channel 360 disposed in the first circulation space S1, the second circulation space S2, and the transition space S3.

Referring to FIG. 21, the main channel 360 may be disposed in the transition space S3, as well as in the first circulation space S1 and the second circulation space S2.

Referring to FIG. 22, the main channel 360 may include a base plate 361 in surface-contact with the first plate 311 and a plurality of protruding members 362.

The base plate 361 may be configured in a flat plate and disposed in surface-contact with the first plate 311. The protruding member 362 may be provided on the base plate 361, and the longitudinal cross-section thereof may have an "n" shape. The plurality of protruding members 362 may be disposed in a staggered pattern along the longitudinal direction of the cooling plate 310.

The cooling medium may perform heat exchange with the first plate 311 and the second plate 312 through the protruding members 362. As described above, heat transfer efficiency may be improved by adjusting the specifications and shape of the main channel 360.

The battery pack according to an embodiment of the present disclosure may include the at least one battery module 10 and a pack case (not shown) accommodating the at least one battery module 10.

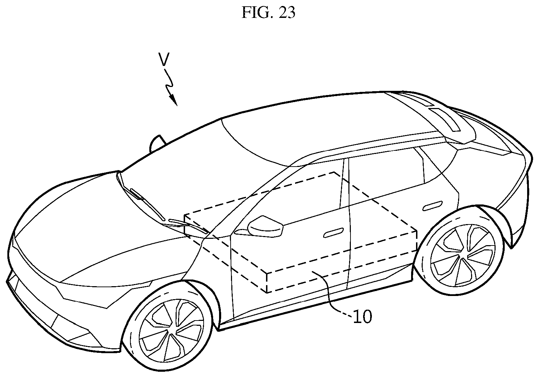

FIG. 23 is a diagram illustrating a vehicle according to another embodiment of the present disclosure.

A vehicle V according to an embodiment of the present disclosure may include one or more battery modules 10 or battery packs according to the present disclosure. As an example, the vehicle V according to an embodiment of the present disclosure may be configured to include at least one or more battery packs among the battery packs described above.

In addition, the vehicle V according to an embodiment of the present disclosure may further include various other elements included in the vehicle, in addition to the battery pack. For example, the vehicle V according to an embodiment of the present disclosure may further include a car body, a motor, and control devices such as an ECU (Electronic Control Unit) in addition to the battery pack according to an embodiment of the present disclosure.

Meanwhile, the battery pack according to an embodiment of the present disclosure may also be provided in other devices, instruments, and facilities, such as an energy storage system using secondary batteries, in addition to the vehicle V.

Although terms indicating directions such as upward, downward, left, right, forward, and backward are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the the scope of the claims to be described below by those skilled in the art to which the present disclosure pertains.

Although the description of the present disclosure and the accompanying drawings to illustrate the embodiments thereof may be somewhat exaggerated in order to emphasize or highlight the technical concept of the present disclosure, it will be obvious to those skilled in the art that various types of modifications are possible in consideration of the content previously described and shown in the drawings.

## Claims

1. A battery module (10) comprising:
a plurality of cell assemblies (100) comprising a plurality of battery cells (110); and
a heat sink (300) disposed between adjacent cell assemblies (100) among the plurality of cell assemblies (100) and having a plurality of cooling-medium channels (320) through which a cooling medium flows and both surfaces configured in a planar shape to come into surface-contact with the cell assemblies (100), wherein the heat sink (300) comprises a pair of cooling plates (310) spaced a predetermined distance apart from each other and having a circulation space formed therein to allow the cooling medium to flow therein, the pair of cooling plates (310) comprises a first plate (311) and a second plate (312) disposed above the first plate (311) so as to be spaced apart therefrom by the thickness of the circulation space;
wherein the heat sink (300) further comprises a port portion (380) provided on one side of the cooling plate (310) so as to allow the cooling medium to flow in or out therethrough;
**characterized in that** the port portion (380) comprises an inlet port (381) that is connected to the first plate (311) and communicates with the circulation space, and an outlet port (382) that is connected to the second plate (312) and communicates with the circulation space.

2. The battery module (10) according to claim 1,
further comprising a plurality of frame portions (200) configured to accommodate the respective cell assemblies (100),
wherein with respect to the heat sink (300) disposed in a horizontal direction, one frame portion (200) is disposed on the upper surface of the heat sink (300) to come into surface-contact therewith, and another frame portion (200) is disposed upside down on the lower surface of the heat sink (300) to come into surface-contact therewith.

3. The battery module (10) according to claim 1,
wherein the circulation space comprises:
a first circulation space (S1) in which the cooling medium introduced through the inlet port (381) flows in a first direction, which is the longitudinal direction of the cooling plate (310);
a second circulation space (S2) in which the cooling medium flows in a second direction opposite the first direction and exits through the outlet port (382); and
a transition space (S3) formed on the opposite side of the port portion (380) and connecting the first circulation space (S1) and the second circulation space (S2) to each other.

4. The battery module (10) according to claim 3,
wherein the cooling-medium channel (320) comprises:
a pass channel (321) disposed at the center of the circulation space in the longitudinal direction of the cooling plate (310); and
a main channel (330) disposed in the first circulation space (S1) and the second circulation space (S2).

5. The battery module (10) according to claim 4,
wherein the pass channel (321) is configured to separate the first circulation space (S1) and the second circulation space (S2) from each other.

6. The battery module (10) according to claim 4,
wherein the pass channel (321) comprises one end disposed adjacent to the port portion (380) and the other end extending to the transition space (S3), and
transfers a portion of the cooling medium introduced through the inlet port (381) to the transition space (S3).

7. The battery module (10) according to claim 4,
wherein the pass channel (321) and main channel (330) are configured in an uneven shape in the longitudinal cross-section to have a convex section (322, 332) and a concave section (323, 333),
wherein the convex section (322, 332) is in surface-contact with an inner surface of a wall of the second plate (312), and
wherein the concave section (323, 333) is in surface-contact with an inner surface of a wall of the first plate (311).

8. The battery module (10) according to claim 7,
wherein a cutout portion (322a) is formed on the convex section (322) of the pass channel (321) to allow the cooling medium to flow into the concave section (323).

9. The battery module (10) according to claim 7,
wherein the uneven shape is formed sequentially and repeatedly in the main channel (330).

10. The battery module (10) according to claim 4,
wherein the cooling-medium channel (320) further comprises a sub-channel (340) provided in the first circulation space (S1), the second circulation space (S2), or the transition space (S3) and disposed at the position where the pass channel (321) and the main channel (330) are not disposed.

11. The battery module (10) according to claim 10,
wherein the sub-channel (340) comprises:
a recessed plate (341) disposed in surface-contact with the first plate (311);
a protruding plate (342) protruding from the recessed plate (341) in the thickness direction of the cooling plate (310) and disposed in surface-contact with the second plate (312); and
a bent surface (343) connecting the recessed plate (341) and the protruding plate (342) to each other, and
wherein a connecting hole (344) is formed on the bent surface (343).

12. A battery pack comprising the battery module (10) according to any one of claims 1 to 11.

13. A vehicle (V) comprising the battery pack according to claim 12.

## Patentansprüche

1. Batteriemodul (10), umfassend:
eine Mehrzahl von Zellanordnungen (100), welche eine Mehrzahl von Batteriezellen (110) umfassen; und
eine Wärmesenke (300), welche zwischen benachbarten Zellanordnungen (100) unter der Mehrzahl von Zellanordnungen (100) angeordnet ist und eine Mehrzahl von Kühlmittelkanälen (320) aufweist, durch welche ein Kühlmittel strömt und wobei beide Flächen in einer ebenen Form eingerichtet sind, um mit den Zellanordnungen (100) in Flächenkontakt zu kommen, wobei die Wärmesenke (300) ein Paar von Kühlplatten (310) umfasst, welche eine vorbestimmte Distanz voneinander beabstandet sind und einen Zirkulationsraum aufweisen, welcher darin gebildet ist, um zuzulassen, dass das Kühlmittel darin strömt, wobei das Paar von Kühlplatten (310) eine erste Platte (311) und eine zweite Platte (312) umfasst, welche über der ersten Platte (311) angeordnet ist, um davon um die Dicke des Zirkulationsraums beabstandet zu sein;
wobei die Wärmesenke (300) ferner einen Mündungsteil (380) umfasst, welcher an einer Seite der Kühlplatte (310) bereitgestellt ist, um zuzulassen, dass das Kühlmittel dadurch rein oder raus strömt;
**dadurch gekennzeichnet, dass** der Mündungsteil (380) eine Einlassmündung (381), welche mit der ersten Platte (311) verbunden ist und mit dem Zirkulationsraum kommuniziert, und eine Auslassmündung (382) umfasst, welche mit der zweiten Platte (312) verbunden ist und mit dem Zirkulationsraum kommuniziert.

2. Batteriemodul (10) nach Anspruch 1,
ferner umfassend eine Mehrzahl von Rahmenteilen (200), welche dazu eingerichtet sind, die jeweiligen Zellanordnungen (100) aufzunehmen,
wobei, in Bezug auf die Wärmesenke (300) in einer horizontalen Richtung angeordnet, ein Rahmenteil (200) an der oberen Fläche der Wärmesenke (300) angeordnet ist, um damit in Flächenkontakt zu kommen, und ein anderer Rahmenteil (200) kopfüber an der unteren Fläche der Wärmesenke (300) angeordnet ist, um damit in Flächenkontakt zu kommen.

3. Batteriemodul (10) nach Anspruch 1,
wobei der Zirkulationsraum umfasst:
einen ersten Zirkulationsraum (S1), in welchem das Kühlmittel, welches durch die Einlassmündung (381) eingeführt ist, in einer ersten Richtung strömt, welche die longitudinale Richtung der Kühlplatte (310) ist;
einen zweiten Zirkulationsraum (S2), in welchem das Kühlmittel in einer zweiten Richtung entgegengesetzt zu der ersten Richtung strömt und durch die Auslassmündung (382) austritt; und
einen Übergangsraum (S3), welcher an der entgegengesetzten Seite zu dem Mündungsteil (380) gebildet ist und den ersten Zirkulationsraum (S1) und den zweiten Zirkulationsraum (S2) miteinander verbindet.

4. Batteriemodul (10) nach Anspruch 3,
wobei der Kühlmittelkanal (320) umfasst:
einen Durchgangskanal (321), welcher an dem Zentrum des Zirkulationsraums in der longitudinalen Richtung der Kühlplatte (310) angeordnet ist; und
einen Hauptkanal (330), welcher in dem ersten Zirkulationsraum (S1) und dem zweiten Zirkulationsraum (S2) angeordnet ist.

5. Batteriemodul (10) nach Anspruch 4,
wobei der Durchgangskanal (321) dazu eingerichtet ist, den ersten Zirkulationsraum (S1) und den zweiten Zirkulationsraum (S2) voneinander zu trennen.

6. Batteriemodul (10) nach Anspruch 4,
wobei der Durchgangskanal (321) ein Ende umfasst, welches benachbart zu dem Mündungsteil (380) angeordnet ist, und wobei das andere Ende sich zu dem Übergangsraum (S3) erstreckt, und
einen Teil des Kühlmittels, welches durch die Einlassmündung (381) eingeführt ist, zu dem Übergangsraum (S3) transferiert.

7. Batteriemodul (10) nach Anspruch 4,
wobei der Durchgangskanal (321) und der Hauptkanal (330) in einer ungleichmäßigen Form in dem longitudinalen Querschnitt eingerichtet sind, um einen konvexen Abschnitt (322, 332) und einen konkaven Abschnitt (323, 333) aufzuweisen,
wobei der konvexe Abschnitt (322, 332) mit einer Innenfläche einer Wand der zweiten Platte (312) in Flächenkontakt steht, und
wobei der konkave Abschnitt (323, 333) mit einer Innenfläche einer Wand der ersten Platte (311) in Flächenkontakt steht.

8. Batteriemodul (10) nach Anspruch 7,
wobei ein Ausschnittteil (322a) an dem konvexen Abschnitt (322) des Durchgangskanals (321) gebildet ist, um zuzulassen, dass das Kühlmittel in den konkaven Abschnitt (323) strömt.

9. Batteriemodul (10) nach Anspruch 7,
wobei die ungleichmäßige Form sequenziell und wiederholt in dem Hauptkanal (330) gebildet ist.

10. Batteriemodul (10) nach Anspruch 4,
wobei der Kühlmittelkanal (320) ferner einen Unterkanal (340) umfasst, welcher in dem ersten Zirkulationsraum (S1), dem zweiten Zirkulationsraum (S2) oder dem Übergangsraum (S3) bereitgestellt und an der Position angeordnet ist, wo der Durchgangskanal (321) und der Hauptkanal (330) nicht angeordnet sind.

11. Batteriemodul (10) nach Anspruch 10,
wobei der Unterkanal (340) umfasst:
eine zurückgeschnittene Platte (341), welche in Flächenkontakt mit der ersten Platte (311) angeordnet ist;
eine hervorstehende Platte (342), welche von der zurückgeschnittenen Platte (341) in der Dickenrichtung der Kühlplatte (310) hervorsteht und in Flächenkontakt mit der zweiten Platte (312) angeordnet ist; und
eine gebogene Fläche (343), welche die zurückgeschnittene Platte (341) und die hervorstehende Platte (342) miteinander verbindet, und
wobei ein Verbindungsloch (344) an der gebogenen Fläche (343) gebildet ist.

12. Batteriepack umfassend das Batteriemodul (10) nach einem der Ansprüche 1 bis 11.

13. Fahrzeug (V) umfassend den Batteriepack nach Anspruch 12.

## Revendications

1. Module de batterie (10) comprenant :
une pluralité d'ensemble de cellules (100) comprenant une pluralité de cellules de batterie (110) ; et
un dissipateur thermique (300) disposé entre des ensembles de cellules (100) adjacents parmi la pluralité d'ensembles de cellules (100) et ayant une pluralité de canaux d'agent de refroidissement (320) à travers lesquels un agent de refroidissement s'écoule et les deux surfaces configurées en une forme plane pour entrer en contact de surfaces avec les ensembles de cellules (100), dans lequel le dissipateur thermique (300) comprend une paire de plaques de refroidissement (310) espacées d'une distance prédéterminée l'une de l'autre et ayant un espace de circulation formé dans celles-ci pour permettre à l'agent de refroidissement de s'écouler dans celles-ci, la paire de plaques de refroidissement (310) comprend une première plaque (311) et une seconde plaque (312) disposée au-dessus de la première plaque (311) de manière à être espacée de celle-ci par l'épaisseur de l'espace de circulation ;
dans lequel le dissipateur thermique (300) comprend en outre une partie à orifices (380) prévue sur un côté de la plaque de refroidissement (310) de manière à permettre à l'agent de refroidissement de s'écouler pour entrer ou sortir à travers celle-ci ;
**caractérisé en ce que** la partie à orifices (380) comprend un orifice d'entrée (381) qui est relié à la première plaque (311) et communique avec l'espace de circulation, et un orifice de sortie (382) qui est relié à la seconde plaque (312) et communique avec l'espace de circulation.

2. Module de batterie (10) selon la revendication 1,
comprenant en outre une pluralité de parties cadres (200) configurées pour accueillir les ensembles de cellules (100) respectifs,
dans lequel, par rapport au dissipateur thermique (300) disposé dans une direction horizontale, une partie cadre (200) est disposée sur la surface supérieure du dissipateur thermique (300) pour entrer en contact de surfaces avec celle-ci, et une autre partie cadre (200) est disposée à l'envers sur la surface inférieure du dissipateur thermique (300) pour entrer en contact de surfaces avec celle-ci.

3. Module de batterie (10) selon la revendication 1,
dans lequel l'espace de circulation comprend :
un premier espace de circulation (S1) dans lequel l'agent de refroidissement introduit à travers l'orifice d'entrée (381) s'écoule dans une première direction, qui est la direction longitudinale de la plaque de refroidissement (310) ;
un second espace de circulation (S2) dans lequel l'agent de refroidissement s'écoule dans une deuxième direction opposée à la première direction et sort à travers l'orifice de sortie (382) ; et
un espace de transition (S3) formé sur le côté opposé de la partie à orifices (380) et reliant le premier espace de circulation (S1) et le second espace de circulation (S2) l'un à l'autre.

4. Module de batterie (10) selon la revendication 3,
dans lequel le canal d'agent de refroidissement (320) comprend :
un canal de passage (321) disposé au centre de l'espace de circulation dans la direction longitudinale de la plaque de refroidissement (310) ; et
un canal principal (330) disposé dans le premier espace de circulation (S1) et le second espace de circulation (S2).

5. Module de batterie (10) selon la revendication 4,
dans lequel le canal de passage (321) est configuré pour séparer le premier espace de circulation (S1) et le second espace de circulation (S2) l'un de l'autre.

6. Module de batterie (10) selon la revendication 4,
dans lequel le canal de passage (321) comprend une extrémité disposée adjacente à la partie à orifices (380) et l'autre extrémité s'étendant jusqu'à l'espace de transition (S3), et
transfère une partie de l'agent de refroidissement introduit à travers l'orifice d'entrée (381) vers l'espace de transition (S3).

7. Module de batterie (10) selon la revendication 4,
dans lequel le canal de passage (321) et le canal principal (330) sont configurés avec une forme irrégulière dans la section longitudinale pour avoir une section convexe (322, 332) et une section concave (323, 333),
dans lequel la section convexe (322, 332) est en contact de surfaces avec une surface intérieure d'une paroi de la seconde plaque (312), et
dans lequel la section concave (323, 333) est en contact de surfaces avec une surface intérieure d'une paroi de la première plaque (311).

8. Module de batterie (10) selon la revendication 7,
dans lequel une partie découpée (322a) est formée sur la section convexe (322) du canal de passage (321) pour permettre à l'agent de refroidissement de s'écouler dans la section concave (323).

9. Module de batterie (10) selon la revendication 7,
dans lequel la forme irrégulière est formée de manière séquentielle et de manière répétée dans le canal principal (330).

10. Module de batterie (10) selon la revendication 4,
dans lequel le canal d'agent de refroidissement (320) comprend en outre un canal secondaire (340) prévu dans le premier espace de circulation (S1), le second espace de circulation (S2) ou l'espace de transition (S3) et disposé à la position où le canal de passage (321) et le canal principal (330) ne sont pas disposés.

11. Module de batterie (10) selon la revendication 10,
dans lequel le canal secondaire (340) comprend :
une plaque en retrait (341) disposée en contact de surfaces avec la première plaque (311) ;
une plaque saillante (342) faisant saillie depuis la plaque en retrait (341) dans la direction d'épaisseur de la plaque de refroidissement (310) et disposée en contact de surfaces avec la seconde plaque (312) ; et
une surface courbée (343) reliant la plaque en retrait (341) et la plaque saillante (342) l'une à l'autre, et
dans lequel un trou de liaison (344) est formé sur la surface courbée (343).

12. Bloc-batterie comprenant le module de batterie (10) selon l'une quelconque des revendications 1 à 11.

13. Véhicule (V) comprenant le bloc-batterie selon la revendication 12.
